# EUROPEAN PATENT APPLICATION

(11) **EP 2 296 337 A1**
(43) Date of publication of application: **16.03.2011**
(21) Application number: 09290693.2
(22) Date of filing: 11.09.2009
(51) Int. Cl.: H04L 29/06, G06F 21/00, H04L 29/12

(54) **Method of protecting access to data on a network**

(71) Applicant: Gemalto SA, 92190 Meudon (FR)
(72) Inventor: Jutard, Laurent, 13190 Allauch (FR)

(57) **Abstract**

The invention is a method of protecting access to a data which is intended to be retrieved from a server by a client through the Internet network. The server and the client comprise a shared secret value. The data is reachable through a one time URL. The method comprises the step of retrieving an addressing value from the server, the step of generating a one time URL from both the addressing value and the shared secret value in said client, and the step of retrieving said data by using said one time URL.

## Description

### (Field of the invention)

The present invention relates to methods of protecting access to data on a network. It relates particularly to methods of protecting access to data sent between two entities through the Internet network.

### (Prior art)

On a network, data is generally provided by a server through a dedicated Uniform Resource Identifier, also named URI. In particular Uniform Resource Locator (URL) is a kind of URI. It is known to use one time URL for temporary content. The exchanges of data between a client and a server over a network may require the protection of the data conveyed through the network. The security of the exchanged data may rely on the public key scheme. The data protection may also be carried out with a session key which is known by both sides. In such a case the session key is called symmetric key. For high secure sessions, several session keys may be successively used during a unique session. For security reasons, the system must avoid to convey the session keys to be used from a side to the other side. Moreover the deployment of a large number of session keys between a client and a server is complex and required costly security mechanisms.

There is a need for providing a dynamic mechanism allowing to securely exchange one or several data between a client entity and a server entity without session key transport.

### (Summary of the Invention)

An object of the invention is to solve the above mentioned technical problem.

The object of the present invention is a method of protecting access to a data which is intended to be retrieved from a first entity by a second entity through the Internet network. Said first and second entities comprise a shared secret value. Said data is reachable through a one time URI. Said method comprises a step of retrieving an addressing value from the first entity. Said method comprises a step of generating said one time URI from the retrieved addressing value and from said shared secret value. The generation of the one time URI is carried out in the second entity. Said method comprises a step of retrieving said data by using the generated one time URI,

Advantageously, the first entity may check the validity of said one time URI and may refuse the retrieving of said data if the checking has failed.

In a preferred embodiment, the one time URI may be generated by using One-Time-Password mechanism.

Advantageously, said first and second entities may comprise a second shared secret value and sadi data may be ciphered/deciphered with the second shared secret value.

A plurality of data may be intended to be retrieved by the second entity. A specific one time URI may be respectively generated by the second entity for each data to be retrieved.

Advantageously, several addressing values may be retrieved from the first entity and each of said addressing values may have a limited validity duration.

Advantageously, said data may be audio/video content.

The second entity may be either a hardware secure token or a couple made of a host machine and a hardware secure token connected to the host machine.

Advantageously, said first entity may be made of first, second and third machines. The first machine may be a portal server providing the addressing value. The second machine may be a content server providing the data to be retrieved. The third machine may be an authentication server able to check the validity of a one time URI .

Another object of the invention is a system comprising a host machine and a connected secure electronic token. The token comprises a shared secret value. The host machine is intended to retrieve a data from a first entity through the Internet network. The host machine comprises a first means capable of retrieving an addressing value from the first entity. The secure electronic tokon comprises a second means capable of generating a part of one time URI from said shared secret value. The system comprises a third means capable of generating a one time URI from both said addressing value and said generated URI part.

Advantageously, the secure electronic token may comprise an identifier and the URI part may be generated from said identifier.

In a preferred embodiment, the second means may be capable ot generating the URI part by using One-Time-Password mechanism.

Another object of the invention is a secure electronic token comprising a shared secret value and a token identifier. The secure electronic token is intended to be connected to a host machine. The secure electronic token comprises a means capable of generating a part of a one time URI from said token identifier and from said shared secret value by using One-Time-Password mechanism.

Advantageously, the secure electronic token may be a smart card or a hardware OTF token.

### (Brief description of the drawings)

Other characteristics and advantages of the present invention will emerge more clearly from a reading of the following description of a number of preferred embodiments of the invention with reference to the corresponding accompanying drawings in which:
- Figure 1 is a first example of a system comprising a server entity and a client entity according to the invention;
- Figure 2 is a second example of a system comprising a server entity and a client entity according to the invention;
- Figure 3 depicts schematically the architecture of a secure electronic token according to one embodiment of the invention; and
- Figure 4 depicts two examples of URL generated according to the invention.

### (Detailed description of the preferred embodiments)

The invention may apply to any types ot server entity and to any types of client entity which are able to manage URI. In particular, the client entity may be a unique device that embeds software application able to generate the required secret data. The client entity may also be couple made of a host machine and a hardware secure token.

The invention may apply to any types of data exchanged between two entities through a network like Internet. For example, the exchanged data may be files, HTML pages, scripts, applications or audio/video content. In particular, the invention is well-suited for protecting TV streaming over the Internet network.

The invention relies on the fact that a data is made available at a temporary URI by the server entity and on the fact that the client entity is able to automatically compute the relevant temporary URI. According to an embodiment of the invention, a unique video file may be split in a plurality of ordered segments. These segments may be successively made available at a series of temporary URI and the client entity is able to automatically compute the series of relevant temporary URI in order to get the plurality of ordered segments.

An advantage of the invention is to securely allow accessing data without ciphering/deciphering the data. Thus time may be saved in data treatment on both server and client sides. In particular, when numerous client entities want to access the same content data on a server entity, the ciphering of the data with as many keys as client entities is very heavy, long and resources consuming.

Another advantage of the invention is to allow the use ot dynamic secret values which are renewed at each session.

Thanks to the invention, the server entity is able to authenticate the client entity.

Another advantage of the invention is to avoid the distribution of scrambling keys over the network for TV streaming domain.

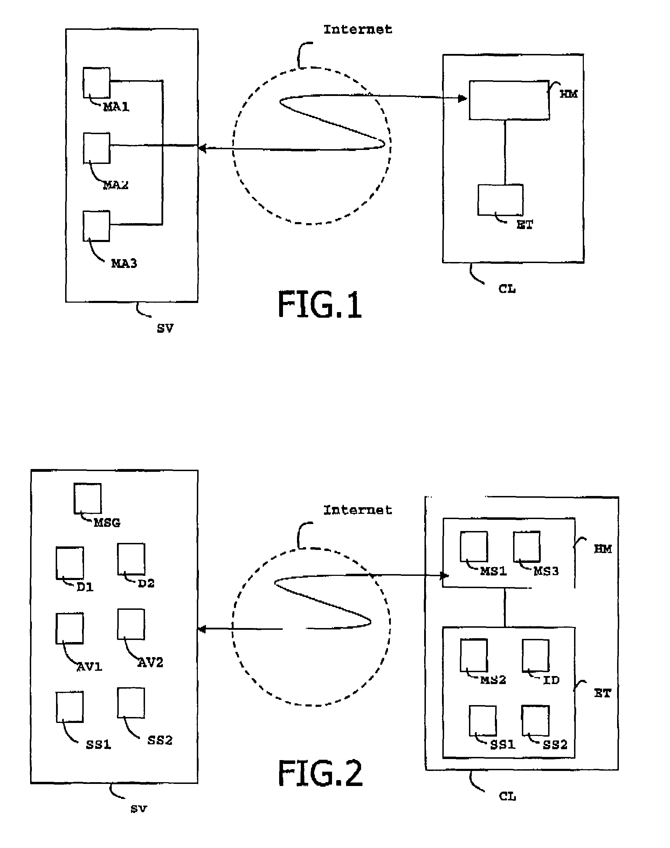

**Figure 1** shows an example of system comprising a server entity SV that provides a client entity CL with access to a data through the Internet network according to the invention.

In this example, the server entity SV is made of three machines MA1, MA2 and MA3. The machine MA1 is a portal server able to provide addressing values which are required for generating the URLs to be used for getting the data. The machine MA2 is a content server able to provide data intended to be distributed. The machine MA3 is an authentication server able to check the validity of an URI.

In a preferred embodiment, the authentication server is an OTP server. For other embodiments, the authentication server may be based on any kind of authentication mechanisms which are well-known in the network domain.

In this example, the client entity CL comprises a host machine HM and a hardware secure token ET connected to the host machine HM. The hardware secure token ET may be a smart card or an OTP token for example.

**Figure 2** shows another example of system comprising a server entity SV that provides a client entity CL with access to a data D11 through the Internet network.

In this example, Lhe server entity SV is made of a unique machine which acts as a portal server, a content server and an OTP authentication server.

In this example, the client entity CL comprises a host machine HM and a hardware OTP token ET connected to the host machine HM.

The server entity SV comprises two secret data SS1 and SS2 shared with the client entity CL. These secret data SS1 and SS2 are assumed to have been deployed in a secure way. The server entity SV comprises a means MSG and two addressing values AV1 and AV2. The means MSG is able to generate a subset of an URL from the secret data SS1. In a preferred embodiment the means MSG is an OTP generator. The server entity SV comprises two data D1 and D2 intended to be distributed to the client entity CL.

In a preferred embodiment, the server entity SV comprises a means able to generate a series of addressing values.

The client entity CL comprises the two secret data SS1 and SS2 which are stored in the token ET. The token ET comprises a means MS2 and a token identifier ID. The means MS2 is able to generate a subset of an URL. In a preferred embodiment, MS2 is an OTP generator. The host machine HM comprises two means MS1 and MS3. MS1 is able to retrieve addressing values from the server entity SV. MS3 is able to generate an URL from an addressing value and a subset of URL generated by MS2.

In this example, both OTP generators MSG and MS2 use the shared secret data SS1 for computing OTP values. Advantageously, MSG and MS2 may be able to generate time-based OTP.

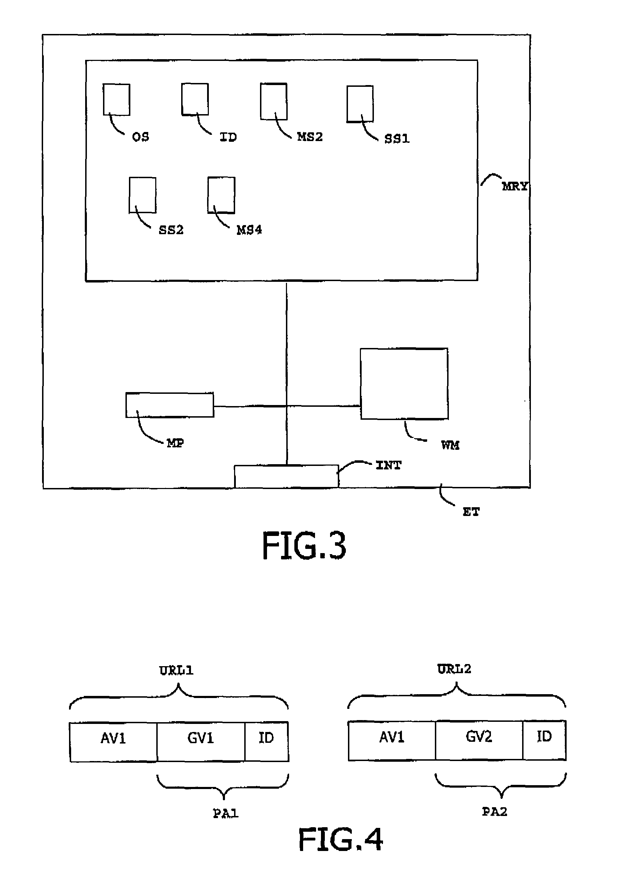

**Figure 3** shows an example of architecture of hardware OTP token ET according to an embodiment of the invention. The token ET contains a microprocessor MP, a communication interface INT, a non volatile memory MRY, and a working memory WM. The working memory may be a RAM memory. The communication interface INT is intended to be connected to a hoot machine and allows exchanging data with the connected host machine. The communication interface INT may be a contactless or a contact interface. The host machine may be a computer. The memory MRY may be an EEPROM or a Flash memory. The memory MRY contains an operating system OS, a token identifier ID, two secret data SS1 and SS2 and two means MS2 and MS4. In the example of Figure 3, the memory MRY is implemented as a unique non volatile memory, The memory MRY may also be implemented as any combination of several non volatile memories of different types.

The means MS2 is able to generate a subset of an URL from the secret data SS1. In a preferred embodiment, the means MS2 is an OTP generator.

In this example, the token ET comprises a means MS4 which is able to decipher a data by using the secret value SS2.

Advantageously, the operating system OS may comprise a virtual machine, in particular a Java ^{®} virtual machine or a Net ^{®} virtual machine.

The microprocessor MP cooperates with the working memory WM and is intended to run the operating system OS. The two means MS2 and MS4 may be either software applications run by the microprocessor MP or hardware designed. These two means may be implemented as two distinct elements or merged in one or several elements.

In a preferred embodiment, the two means are implemented as two different components.

Advantageously, the token ET may be a smart card.

**Figure 4** shows two examples of URL generated according to the invention.

The first URL URL1 is composed of two elements: an addressing value AV1 and a part PA1. The part PA1 is made of two elements: a value GV1 and the token identifier ID. The value GV1 is a subset of URL. The value GV1 has been generated by the means MS2 or by the means MSG.

The second URL URL2 is composed of two elements: an addressing value AV1 and a part PA2. The part PA2 is made of two elements: a value GV2 and the token identifier ID. The value GV2 is a subset of URL. The value GV2 has been generated by the means MS2 or by the means MSG.

In the following detailed embodiments, the client entity CL is assumed to have registered to the server entity SV and to have exchange its identifier ID. In a preferred embodiment, both server entity SV and client entity CL are assumed to have access to OTP generators using synchronized OTP algorithms. In particular the synchronization may rely on the time-based OTP mechanism. Alternately, both server entity SV and client entity CL may have access to crypto engines which use synchronized algorithms.

Both server entity SV and client entity CL are assumed to be able to generate URLs in a synchronized manner. For example, the synchronization may rely on the current date/time value or on counters managed on both sides.

An example of embodiment of the method of protecting access to a data according to the invention is described below. The method comprises several steps.

In this embodiment, the server entity SV is made of a HTTP streaming portal server MA1, an HTTP audio/video content provider MH2 and an authentication server MA3. In this example, MA3 comprises an OTP generator. The server entity SV is reachable through the Internet. The server entity SV is intended to distribute audio/video content through a plurality of ordered data D1, D2.

In this embodiment, the client entity CL is composed of a smart card ET and a host machine HM of Personal Computer type. The Personal Computer is connected to the Internet and to the smart card ET. Alternately, the host machine HM may be a TV, a set-top box, a mobile phone or any device intended to receive a data distributed by the server entity SV through Internet.

At a first step, the client entity CL generates a first request for starting a session which allows getting the data D1. Then the client entity CL sends the request to the portal server MA1. In response to the request, the portal server sends a first addressing value AV1 to the client entity CL. AV1 is a value related to the data D1. AV1 allows generating a part of the URL where D1 may be reached on the Internet.

At a second step, the smart card ET generates a subset GV1 of URL from the secret data SS1. Then the smart card provides the host machine HM with the generated subset GV1 and with its identifier ID. GV1 corresponds to a part of the URL where the data D1 may be reached. The host machine HM builds the URL URL1 corresponding to the data D1. URL1 is built from AV1, GV1 and ID. In a preferred embodiment, URL1 is generated as the concatenation of AV1, GV1 and ID as drawn at Figure 4.

At a third step, the host machine HM connects the URL1. In this example, URL1 corresponds to an address in the content server MA2.

At a fourth step, the content server MA2 extracts the subset GV1 and the identifier ID from the received URL1 and asks the authentication server MA3 for an authentication of the couple (GV1, ID).

At a titth step, the content server MA2 authorizes the download of D1 by the host machine HM if the authentication phase has been successful.

Thus the client entity CL gets the data D1 from the server entity SV.

If a further data D2 is to be retrieved by the client entity CL, the above-deseribed steps are repeated for the new data D2. In a first embodiment, the same addressing value AV1 is used with a new generated subset GV2 of URL for building URL2. URL2 is the URL where the data D2 may be retrieved at content server MA2 side. Thus the client entity may avoid the step of requesting the addressing value from the server entity SV. In a second embodiment, a new addressing value AV2 is provided by the server entity SV.

URL1 is deactivated by the server entity SV once the data D1 has been downloaded by the client entity CL. Advantageously, URL1 is deactivated by the content server MA2.

Alternately, the authentication of the part GV1 of the URL1 may be authorized only once by the authentication server MA3.

Alternately, the URL1 may remain valid during a limited period. The validity duration of URL1 may be achieved through a time-based One-Time-Password mechanism.

Thanks to the invention the data D1 and D2 may be transmitted through Internet in clear mode. In other words, neither D1 nor D2 are encrypted.

In order to increase the security of data transport, an additional key may be used for ciphering/deciphering D1 and D2. For example, the secret data SS2 may be used as symmetric key since both the server entity SV and the client entity CL comprise the secret data SS2.

Advantageously, the addressing value AV1 may be used as a public part of URLs. In this case AV1 may be used by a set of client entities. Thus each client entity computes its own URL based on both the public part AV1 and a private part. The private part is specific to the client entity.

Advantageously, the use of the token ET may be controlled through a value specific to the user of the token. For example, the access to the token ET may be controlled by a PIN code or a biometric value.

## Claims

1. A method of protecting access to a data (D1) intended to be retrieved from a first entity (SV) by a second entity (CL) through the Internet network, said first and second entities (SV, CL) comprising a shared secret value (SS1), said data (D1) being reachable through a one time URI (URL1), said method comprising the following step:
a) retrieving an addressing value (AV1) from the first entity (SV),
**characterized in that** said method comprises the following step:
b) generating said one time URI (URL1) from said addressing value (AV1) and from said shared secret value (SS1) in said second entity (CL), and retrieving said data (D1) by using said one time URI (URL1).

2. A method according to claim 1, wherein the first entity (SV) checks the validity of said one time URI (URL1) and refuses the retrieving of said data (D1) when the checking fails.

3. A method according to one of claims 1 to 2, wherein the one time URI (URL1) is generated hy using One-Time-Password mechanism.

4. A method according to one of claims 1 to 3, wherein said first and second entities (SV, CL) comprise a second shared secret value (SS2) and wherein said data (D1) is ciphered/deciphered with said second shared secret value (SS2).

5. A method according to one of claims 1 to 4, wherein a plurality of data (D1, D2) is intended to be retrieved by the second entity (CL) and wherein a specific one time URI (URL1, URL2) is respectively generated by the second entity (CL) for each data (D1, D2).

6. A method according to claim 5, wherein several addressing values (AV1, AV2) are retrieved from the first entity (SV) and wherein each of said addressing values (AV, AV2) has limited validity duration.

7. A method according to one of claims 1 to 6, wherein said data (D1) is audio/video content.

8. A method according to one of claims 1 to 7, wherein said second entity (CL) is either a hardware secure token (ET) or a couple made of a host machine (HM) and a hardware secure token connected (ET) to the host machine (HM).

9. A method according to one of claims 1 to 8, wherein said first entity (SV) is made of first, second and third machines (MA1, MA2, MA3), wherein said first machine (MA1) is a portal server providing the addressing value (AV1), wherein said second machine (MA2) is a content server providing the data (D1) and wherein said third machine (MA3) is an authentication server able to check the validity of a one time URI.

10. A system comprising a host machine (HM) and a connected secure electronic token (ET), said token (ET) comprising a shared secret value (SS1), said host machine (HM) being intended to retrieve a data (D1) from a first entity (SV) through the Internet network, said host machine (HM) comprising a first means (MS1) able to retrieve an addressing value (AV1) from the first entity (SV),
**characterized in that** said secure electronic token (ET) comprises a second means (MS2) able to generate a part (PA1) of one time URI from said shared secret value (SS1) and **in that** said system comprises a third means (MS3) able to generate a one time URI (URL1) from said addressing value (AV1) and said part (PA1).

11. A system according to claim 10, wherein said secure electronic token (ET) comprises an identifier (ID) and wherein said part (PA1) is generated from said identifier (ID).

12. A system according to one of claims 10 to 11, wherein the second means (MS2) is able to generate the part (PA1) by using One-Time-Password mechanism.

13. A secure electronic token (ET) comprising a shared secret value (SS1) and a token identifier (ID), said token (ET) being intended to be connected to a host machine (HM), **characterized in that** said secure electronic token (ET) comprises a means (MS2) able to generate a part of a one time URI (URL1) from said token identifier (ID) and from said shared secret value (SS1) by using One-Time-Password mechanism.

14. A secure electronic token (ET) according to claim 13, wherein said token (ET) is a smart card or a hardware OTP token.
